# EUROPEAN PATENT APPLICATION

(11) **EP 1 850 547 A2**
(43) Date of publication of application: **31.10.2007**
(21) Application number: 06254870.6
(22) Date of filing: 20.09.2006
(51) Int. Cl.: H04L 27/26

(54) **OFDMA communication apparatus**

(30) Priority: 26.04.2006 JP 2006121941
(71) Applicant: Fujitsu Ltd., Kawasaki-shi, Kanagawa 211-8588 (JP)
(72) Inventor: Machida, Mamoru, c/o Fujitsu Limited, Kawasaki-shi, Kanagawa 211-8588 (JP)
(74) Representative: Fenlon, Christine Lesley

(57) **Abstract**

An OFDMA communication apparatus is disclosed that operates under media access control based on an OFDMA standard and modulates transmission data into an OFDMA signal. The OFDMA communication apparatus includes a preamble generating unit (31) that generates plural types of preamble patterns; a broadcast generating unit (32) that generates broadcast data; a burst generating unit (33) that generates a data burst according to the transmission data; a data multiplexing unit (34) that generates multiplexed data by multiplexing the data generated by the preamble generating unit (31), the broadcast generating unit (32), and the burst generating unit (33) on a predetermined physical layer format; an OFDM unit that performs orthogonal frequency division multiplexing on the multiplexed data using plural sub carriers; a carrier assigning unit that assigns the preamble patterns to at least four sub carrier groups; and a symbol assigning unit that divides the preamble patterns into plural sub pattern element groups that are time-multiplexed on the predetermined physical layer format.

## Description

### BACKGROUND OF THE INVENTION

### 1. Field of the Invention

The present invention relates to an OFDMA communication apparatus that multiplexes predetermined preamble data and broadcast data into transmission data, performs OFDMA modulation on the multiplexed transmission data, and transmits the modulated transmission data to plural receiving apparatuses (e.g., mobile stations).

### 2. Description of the Related Art

The WiMAX (Worldwide Interoperability for Microwave Access) scheme, which is based on the IEEE 802.16-2004 standard, employs the OFDM (Orthogonal Frequency Division Multiplexing) scheme as a modulation scheme where frequency resources used by data are divided by time. On the other hand, in the IEEE 802.16e standard related to the mobile broadband system, the OFDMA (Orthogonal Frequency Division Multiple Access) scheme is employed where data may be further divided into sub carriers in addition to time division defined by the OFDM scheme.

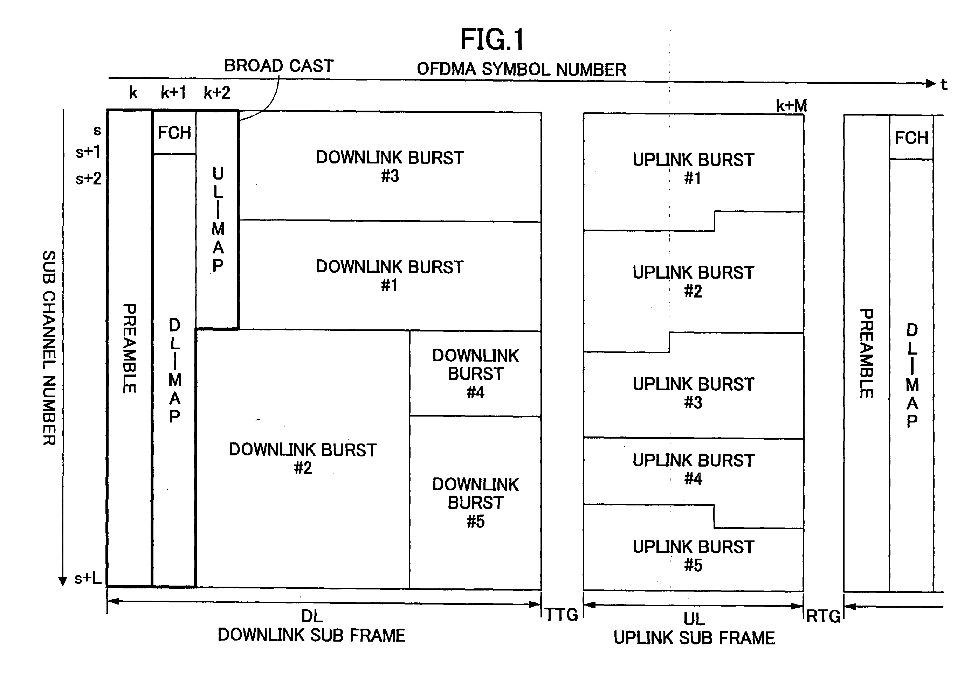

FIG. 1 is a diagram showing a frame format of the OFDM physical layer. In this drawing, the vertical axis represents the logical number of sub channels, and the horizontal axis represents the symbol number. The downlink sub frame is made up of a preamble, a broadcast message including a frame control header (FCH), a downlink MAP message (DL_MAP), and an uplink MAP message (UL_MAP), and plural downlink data bursts. The uplink sub frame is made up of plural uplink data bursts.

The preamble includes synchronization (sync) data for synchronizing the frequency and time of the reception side with the downlink sub frame, and all channels of the preamble are transmitted simultaneously. It is noted that plural types of preamble patterns that have a predetermined length are provided. The FCH defines the profile (e.g., coding scheme, length, etc.) of the first burst following this FCH. The DL_MAP includes mapping information of the data bursts included in the downlink sub frame, and the UL_MAP includes mapping information of the data bursts included in the uplink sub frame. Each of the data bursts includes an integer number of OFDM symbols, and is assigned a modulation scheme (e. g. , QPSK, 16QAM, 64QAM), a coding scheme, and a coding rate according to the burst profile defined in the DL-MAP. It is noted that the preamble data are modulated by the BPSK scheme, and the broadcast data are modulated by the QPSK scheme.

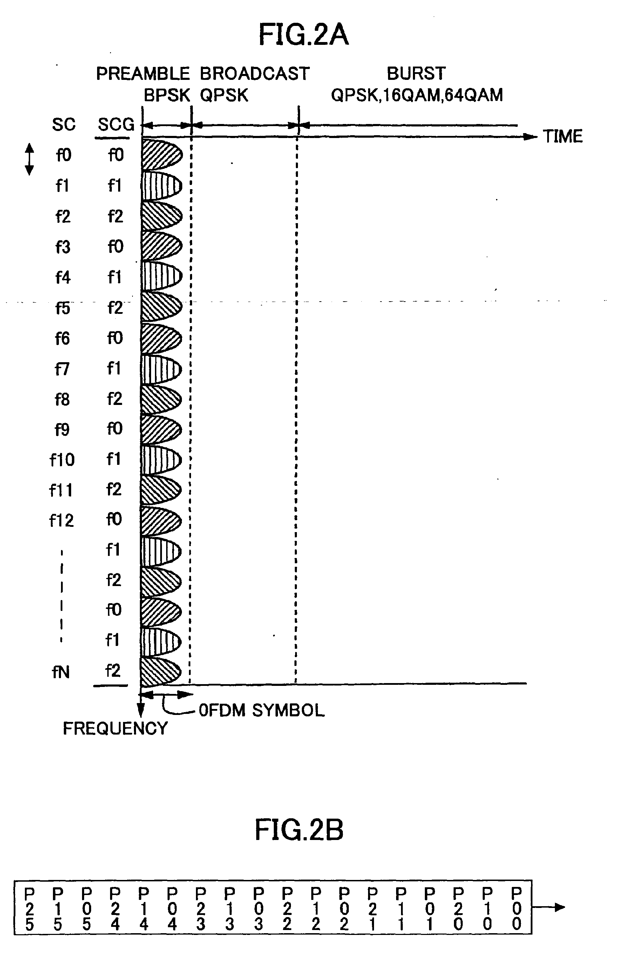

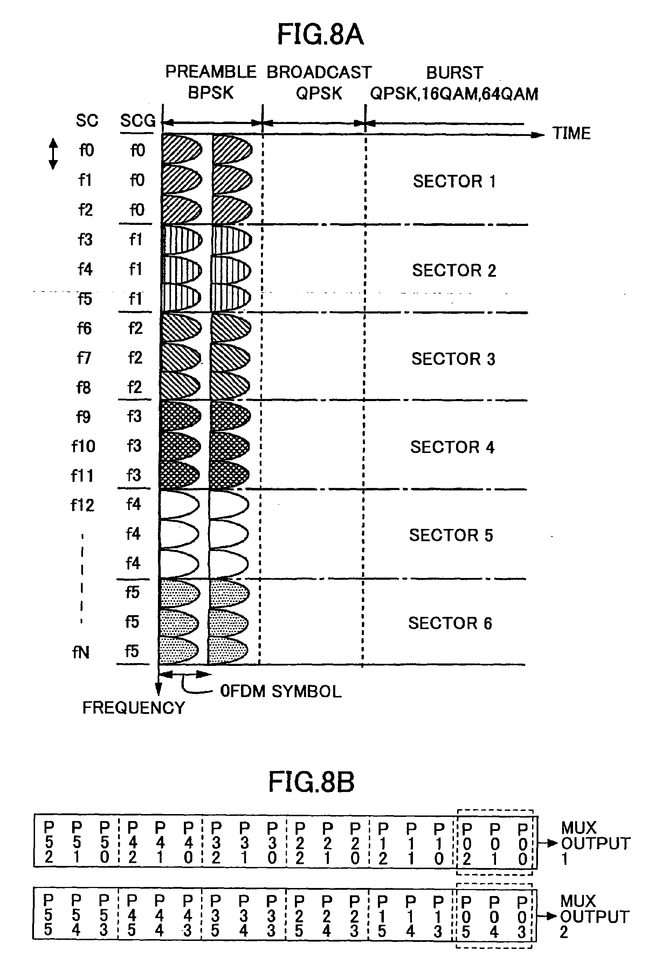

FIG. 2A is a diagram illustrating an exemplary physical layer format for transmitting the preamble according to the WiMAX standard. In this drawing, a portion of the downlink sub frames shown in FIG. 8 are omitted. In the illustrated example, the entire band within a cell (e. g. , 20 MHz) is divided into N+1 (e.g., 2048) sub carriers SCf0-SCfN, and a maximum of three types of preamble patterns P0-P2 may be transmitted according to a reuse factor. It is noted that the three sub carrier groups SCGf0-SCGf2 are assigned to the preamble patterns P0-P2 in the present example.

FIG. 2B is a diagram illustrating an exemplary preamble multiplexed signal that is not yet amplified by OFDMA modulation. For example, the preamble pattern P0 is made up of six types of sub pattern elements P00-P05 that are assigned to the sub carriers SCf0, SCf3, SCf6, ... and so on corresponding to the sub carrier group SCGf0. Specifically, the sub pattern element P00 is assigned to the sub carrier SCf0, the sub pattern element P01 is assigned to the sub carrier SCf3, and the sub pattern element P02 is assigned to the sub carrier SCf6. It is noted that sub pattern elements are assigned to the sub carriers of the sub carrier groups corresponding to the preamble patterns P1 and P2 in a similar manner as is described above.

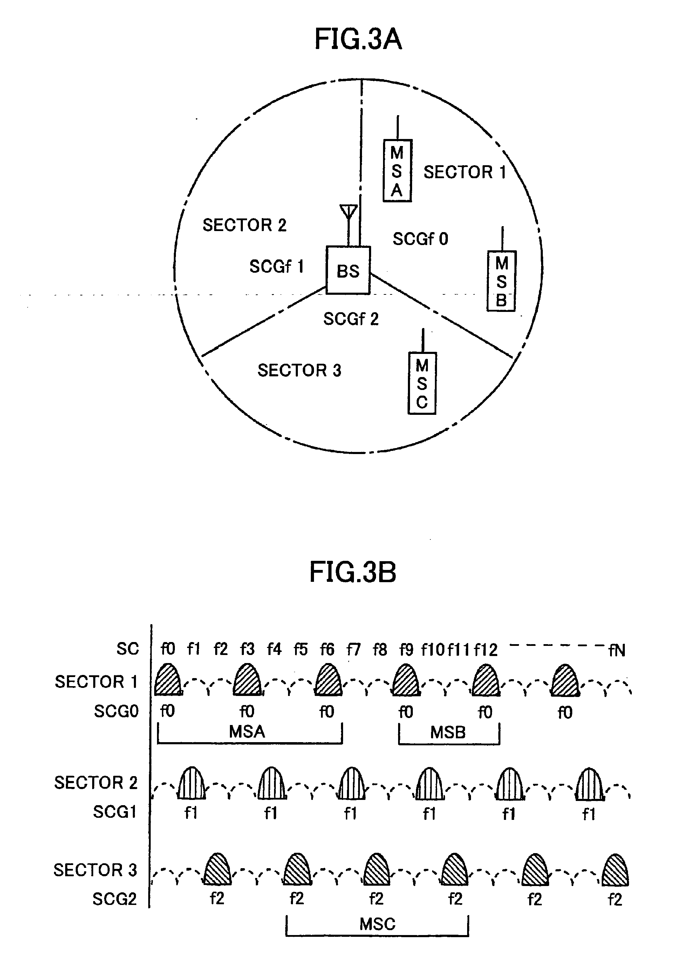

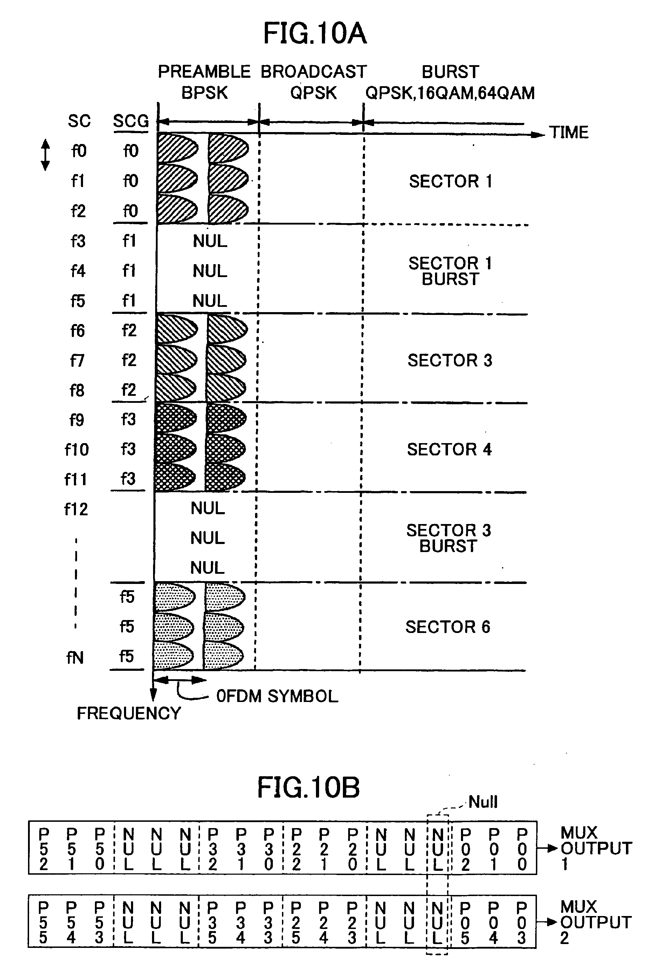

FIG.3A is a diagram illustrating an exemplary case in which a cell is divided into three sectors. Although the reuse factor may be employed to configure the sectors according to the WiMAX standard, the maximum number of sub carrier groups into which the sub carriers may be divided is three. In the illustrated example of FIG. 10A, mobile stations MSA and MSB reside within sector 1, and a mobile station MSC resides within sector 3. It is noted that a base station BS performs sub carrier division and time division on the entire be accommodated without the generation of interference.

FIG. 3B is a diagram illustrating reception of the preamble patterns P0-P2 at the sectors 1-3 in a case where the sub carrier groups SCGfO-SCGf2 are assigned to the sectors 1-3 at the base station BS. The mobile stations MSA and MSB may easily determine that they are residing within sector 1 by recognizing that their reception levels for the sub carrier group SCGf0 is higher than their reception levels for the other sub carrier groups. The mobile station MSC may easily determine that it is residing within sector 3 by recognizing that its reception level for the sub carrier group SCGf2 is higher than its reception levels for the other sub carrier groups. Further, the mobile stations MSA, MSB, and MSC may confirm the sector in which they are currently residing by analyzing the received preamble patterns.

It is noted that the band areas after the FCH may be freely used, and for example, the entire band within a cell may be used by one sector as in the OFDM scheme. Alternatively, as is shown in FIG. 3B, the bands of the sub carriers SCf0-SCf6 may be assigned to the data bursts of the mobile station MSA, the bands of the sub carriers SCf 9-SCf 12 may be assigned to the data bursts of the mobile station MSB, and the bands of the sub carriers SCf6-SCf11 may be assigned to the data bursts of the mobile station MSC, for example. However, it is noted that time division multiplexing is performed with respect to data bursts with overlapping sub carriers.

Japanese Translated International PCT Application Publication No. 2006-507753 discloses a mobile communication system for efficiently performing time and frequency synchronization and cell search by including a synchronization preamble and a cell search preamble in the downlink sub frame.

As can be appreciated, by employing multi-value modulation and the OFDM scheme, OFDMA communication enables simultaneous transmission of a large amount of data and may have various advantages under a multi-pulse environment. However, under the WiMAX standard, no more than three types of preamble patterns can be transmitted so that the amount of data transmitted in one transmission may be relatively small. Therefore, the WiMAX standard may not be suitably applied to a system with a large number of sectors. For example, in some cases a large number of sectors supporting small traffic are desirably accommodated within a cell, and the WiMAX standard has not been adapted for such a system. Also, three preamble patterns may no be adequate in a system where handover is not required and small-capacity data communications are established between adjacent areas, for example.

### SUMMARY OF THE INVENTION

According to an aspect of the present invention, an OFDMA communication apparatus is provided that is capable of effectively using the entire band within a cell according to the OFDMA communication scheme.

According to one embodiment of the present invention, an OFDMA communication apparatus is provided that operates under media access control (MAC) based on an OFDMA standard and modulates transmission data into an OFDMA signal, the apparatus including:
a preamble generating unit that generates a plurality of types of preamble patterns;
a broadcast generating unit that generates broadcast data;
a burst generating unit that generates a data burst according to the transmission data;
a data multiplexing unit that generates multiplexed data by multiplexing the preamble patterns generated by the preamble generating unit, the broadcast data generated by the broadcast generating unit, and the data burst generated by the burst generating unit on a predetermined physical layer format;
an OFDM unit that performs orthogonal frequency division multiplexing on the multiplexed data using a plurality of sub carriers; and
a carrier assigning unit that assigns the preamble patterns to a plurality of sub carrier groups, each of which sub carrier groups includes a plurality of the sub carriers that are adjacent to each other. In one aspect of the present embodiment, a cluster of frequency bands (sub carrier group) may be assigned to each preamble pattern so that handling of the preamble patterns may be facilitated.

According to another embodiment of the present invention, an OFDMA communication apparatus is provided that operates under media access control based on an OFDMA standard and modulates transmission data into an OFDMA signal, the apparatus including:
a preamble generating unit that generates a plurality of types of preamble patterns;
a broadcast generating unit that generates broadcast data;
a burst generating unit that generates a data burst according to the transmission data;
a data multiplexing unit that generates multiplexed data by multiplexing the preamble patterns generated by the preamble generating unit, the broadcast data generated by the broadcast generating unit, and the data burst generated by the burst generating unit on a predetermined physical layer format;
an OFDM unit that performs orthogonal frequency division multiplexing on the multiplexed data using a plurality of sub carriers;
a carrier assigning unit that assigns the preamble patterns to at least four sub carrier groups; and
a symbol assigning unit that divides the preamble patterns into a plurality of sub pattern element groups which sub pattern elements groups are time-multiplexed on the predetermined physical layer format.

In one aspect of the present embodiment, the preamble patterns are assigned to at least four sub carrier groups so that the sub carriers may be efficiently used, and the preamble patterns that cannot be transmitted at once are divided with respect to the time direction into plural sub pattern elements that are transmitted over plural transmissions. In this way, the number of preamble patterns that may be used may be increased.

According to a preferred embodiment of the present invention, the carrier assigning unit assigns the preamble patterns to at least four sub carrier groups, each of which sub carrier groups includes a plurality of the sub carriers that are not adjacent to each other. In one aspect of the present embodiment, since the sub carriers belonging to a sub carrier group are not adjacent to each other on the frequency axis, interference resistance may be improved in preamble pattern transmission.

According to another preferred embodiment of the present invention, the carrier assigning unit assigns the preamble patterns to at least four sub carrier groups, each of which sub carrier groups includes a plurality of the sub carrier that are adjacent to each other. In one aspect of the present embodiment, a cluster of frequency bands (sub carrier group) may be assigned to each preamble patter so that handling of the preamble patterns may be facilitated.

According to another preferred embodiment, the OFDMA communication apparatus of the present invention further includes a carrier stopping unit that controls a DTX command for at least one of the sub carrier groups to be activated at the preamble generating unit, the broadcast generating unit, and the burst generating unit, and stops transmission of the sub carriers belonging to the corresponding sub carrier group. In one aspect of the present embodiment, a band (sector) that is unused (free) may be used by another system implementing the OFDM or OFDMA scheme.

According to another preferred embodiment, the OFDMA communication apparatus of the present invention further includes a preamble stopping unit that directs null data to be multiplexed on a preamble pattern area on the predetermined physical layer format corresponding to at least one of the sub carrier groups, and stops transmission of at least one of the preamble patterns corresponding to the preamble pattern area with the null data. In one aspect of the present embodiment, a transmission band (sub carrier group) for which preamble pattern transmission has been stopped may be added to another sub carrier group (sector) .

According to another preferred embodiment, the OFDMA communication apparatus of the present invention further includes a band control unit that controls the broadcast generating unit and the burst generating unit to arrange a data burst transmission area of the sub carrier group for which preamble pattern transmission has been stopped to be used as a data burst transmission area of another sub carrier group. In one aspect, the OFDM communication apparatus of the present embodiment may adapt to a wide range of communication requirements.

According to another preferred embodiment of the present invention, the sub carrier groups are assigned to sectors into which a cell administered by the present apparatus is divided. In one aspect of the present embodiment, a large number of sectors may be accommodated within the cell, and the entire band within the cell may be used more efficiently.

### BRIEF DESCRIPTION OF THE DRAWINGS

FIG. 1 is a diagram showing an exemplar frame format of an OFDMA physical layer;
FIGS. 2A and 2B are diagrams illustrating an exemplary physical layer format for transmitting preamble data according to the WiMAX standard;
FIGS. 3A and 3B are diagrams illustrating an exemplary application in which a cell is divided into three sectors;
FIG. 4 is a block diagram showing a transmission part according to an embodiment of the present invention;
FIGS. 5A and 5B are diagrams illustrating a physical layer format according to a first embodiment of the present invention;
FIGS. 6A and 6B are diagrams illustrating a physical layer format according to a second embodiment of the present invention;
FIGS. 7A and 7B are diagrams illustrating an exemplary division of a cell into sectors according to the second embodiment of the present invention;
FIGS. 8A and 8B are diagrams illustrating a physical layer format according to a third embodiment of the present invention;
FIGS. 9A and 9B are diagrams illustrating a physical layer format according to a fourth embodiment of the present invention; and
FIGS. 10A and 10B are diagrams illustrating a physical layer format according to a fifth embodiment of the present invention.

### DESCRIPTION OF THE PREFERRED EMBODIMENTS

In the following, preferred embodiments of the present invention are described with reference to the accompanying drawings. It is noted that the same reference numerals assigned to components of the drawings represent the same or corresponding elements.

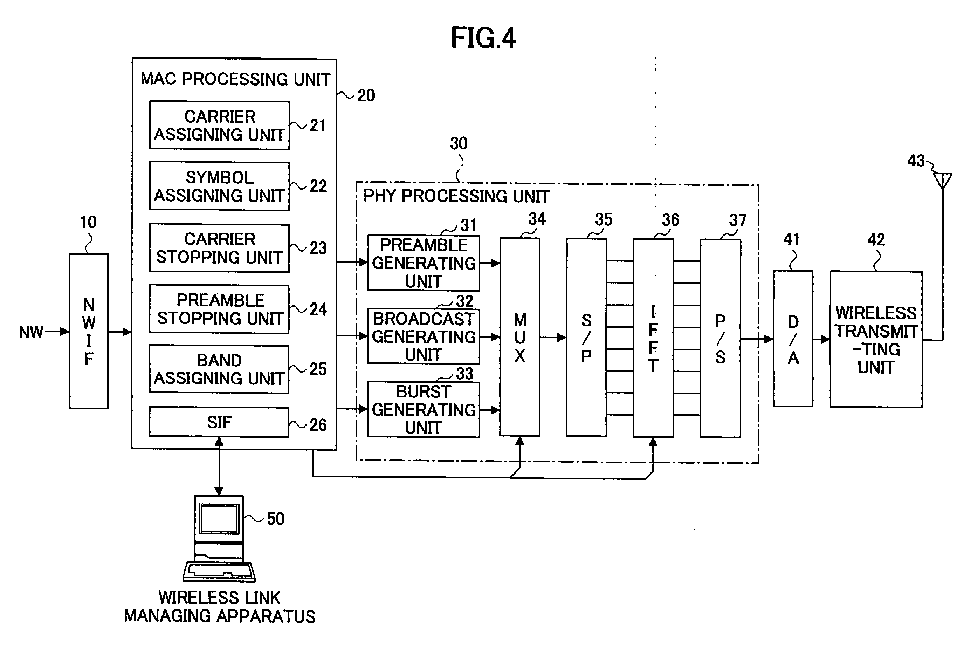

FIG. 4 is a block diagram showing an OFDMA transmission part according to an embodiment of the present invention. In this drawing, a signal is received at a network interface (NWIF) 10 from an external network (NW), and is transmitted to a MAC (Media Access Control) processing unit 20 that performs resource management of the present system and functions as a MAC layer according to the WiMAX standard. Then, the signal received at the MAC processing unit 20 is processed and transmitted to a physical (PHY) processing unit 30 that functions as a physical layer according to the WiMAX standard.

The PHY processing unit 30 includes a preamble generating unit 31, a broadcast generating unit 32, a burst generating unit 33, a multiplexing unit (MUX) 34, a serial/parallel converter (S/P) 35, an inverse fast Fourier transform unit (IFFT) 36, and a parallel/serial converter (P/S) 37.

The preamble generator 31 generates plural preamble symbols according to instructions from the MAC processing unit 20. The broadcast generating unit 32 generates predetermined broadcast data and performs PHY layer processing on the generated broadcast data according to instructions from the MAC processing unit 20. The burst generating unit 33 performs PHY layer processing on transmission data according to instructions from the MAC processing unit 20. The multiplexing unit 34 multiplexes the signals output from the units 31-33 according to multiplexing format (area usage) instructions from the MAC processing unit 20. The S/P converter 35 performs S/P conversion on the multiplexed signal, and the IFFT unit 36 performs inverse fast Fourier transform on the parallel signal from the S/P converter 35 according to instruction parameters from the MAC processing unit 20. The P/S converter 37 converts the IFFT output of the IFFT unit 36 into a serial signal to generate a transmission signal. This transmission signal is converted into an analog signal at a D/A converter 41 after which the analog signal is frequency-converted and amplified at a wireless transmitting unit 42 to be transmitted via an antenna 43.

The MAC processing unit 20 functions as a basic MAC layer, and further includes a carrier assigning unit 21, a symbol assigning unit 22, a carrier stopping unit 23, a preamble stopping unit 24, and a band assigning unit 25.

The carrier assigning unit 21 assigns plural types of preamble patterns to plural sub carrier groups made up of plural sub carriers. The symbol assigning unit 22 divides the preamble patterns into groups of sub pattern elements, and time-multiplexes the groups of sub pattern elements on a physical layer format. The carrier stopping unit 23 arranges a DTX command to act on the preamble generating unit 31, the broadcast generating unit 32, and the burst generating unit 33 with respect to at least one sub carrier group to stop transmission of the sub carriers of the corresponding sub carrier group. The preamble stopping unit 24 stops transmission of a preamble pattern by multiplexing Null data on a preamble pattern area. The band assigning unit 25 acts on the broadcast generating unit 32 and the burst generating unit 33 to enable the data burst transmission area of the sub carrier group of which the preamble transmission has been stopped to be used as the data burst transmission area of another sub carrier group.

The MAC processing unit 20 is connected to a wireless link managing apparatus 50 via a serial interface (SIF) 26. The wireless link managing apparatus 50 establishes connection with the MAC layer, monitors the transmission data traffic amount of each user, and performs control operations such as determining whether the amount of traffic is large/small or whether traffic exists, and changing the communication band of each sector according to instructions from a maintenance administrator.

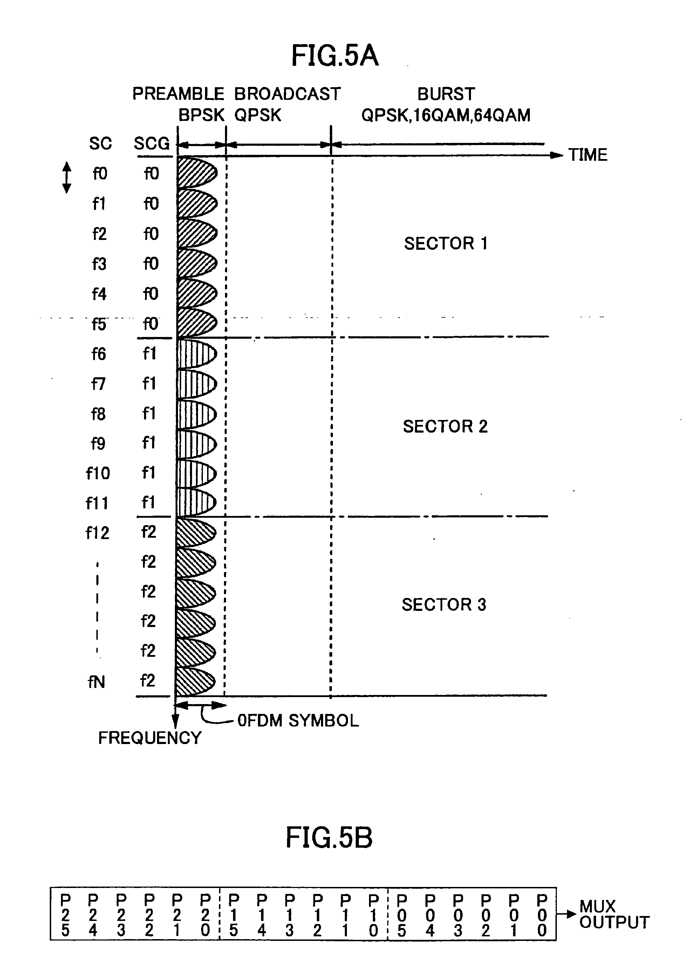

FIG. 5A is a diagram illustrating a frame format of a physical layer according to a first embodiment of the present invention. In the illustrated example, plural types of preamble patterns are assigned to plural sub carrier groups each made up of plural sub carriers that are adjacent to each other.

In the present example, the preamble generating unit 31 generates three types of preamble patterns P0-P2 according to a preamble generating command from the carrier assigning unit 21 of the MAC processing unit 20, and the multiplexing unit 34 assigns the preamble patterns to the sub carrier groups made up of adjacent sub carriers according to a multiplexing format designated by the symbol assigning unit 22 of the MAC processing unit 20.

FIG. 5B is a diagram illustrating a format of a preamble multiplexed signal. In the present example, first, the sub pattern elements P00-P05 of the preamble pattern P0 are time-multiplexed, then, the sub pattern elements of the P10-P15 of the preamble pattern P1 are time-multiplexed, and then, the sub pattern elements P20-P25 of the preamble pattern P2 are time multiplexed.

It is noted that when inverse Fourier transform is performed on the time-multiplexed signal at a later stage by the IFFT unit 36, the adjacent sub carriers SCf0-SCf5 of the sub carrier group SCGf0 are assigned to the preamble pattern P0, the adjacent sub carriers SCf6-SCf11 of the sub carrier group SCGf1 are assigned to the next preamble pattern P1, and the adjacent sub carriers SCf12-SCf17 of the sub carrier group SCGf2 are assigned to the next preamble pattern P2.

According to the first embodiment, the entire band within a cell is divided into three sub carrier groups SCGfO-SCGf2 with the sub carriers of each group arranged adjacent to each other, and the sub carrier groups SCGfO-SCGf2 are respectively assigned to sectors 1-3. In this way, the preamble patterns P0-P2 are transmitted to the sectors 1-3 by frequency division multiplexing (FDD) as is shown in FIG. 5A. Accordingly, handling of the preamble patterns in sector units may be facilitated.

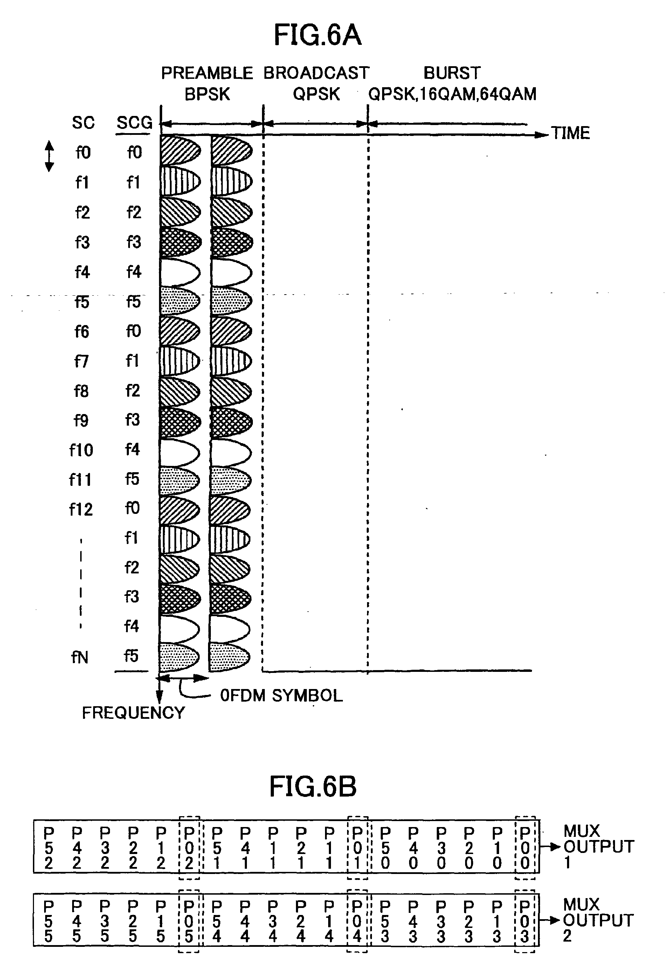

FIG. 6A is a diagram showing a frame format of a physical layer according to a second embodiment of the present invention. In the present embodiment, plural types of preamble patterns are assigned to at least four sub carrier groups (i.e., six sub carrier groups SCGf0-SCGf5 in the illustrated example) that each include plural sub carriers that are not adjacent to each other. Also, the preamble patterns are divided into groups of sub pattern elements, and the groups of the sub pattern elements are time-multiplexed on the physical layer format.

In the present example, the preamble generating unit 31 generates six types of preamble patterns P0-P5 according to a preamble generating command from the carrier assigning unit 21 of the MAC processing unit 20. The multiplexing unit 34 divides each of the preamble patterns into two groups of sub pattern elements (e.g., the preamble pattern P0 is divided into a group of the sub pattern elements P00-P02 and a group of the sub pattern elements P03-P05) and multiplexes the groups of sub pattern elements into two multiplexed signals in the time axis direction according to a multiplexing format designated by the symbol assigning unit 22 of the MAC processing unit 20.

FIG. 6B is a diagram illustrating a format of the preamble multiplexed signals. In the present example, the six preamble patterns P0-P5 are arranged to be associated with the sub carrier groups SCGf0-SCGf5 that are each made up of sub carriers that are not adjacent to each other. For example, the preamble pattern P0 is divided into a group including the first half of the non-adjacent sub pattern elements P00-P02 and a group including the second half of the non-adjacent sub pattern elements P03-P05. The group of the first half of the sub patterns P00-P02 is multiplexed to corresponding positions of the sub carriers SCf0, SCf6, and SCf12 of the sub carrier group SCGf0, and then, the group of the second half of the sub pattern elements P03-P05 is similarly multiplexed to corresponding positions of the sub carriers SCf0, SCf6, and SCf12 of the sub carrier group SCGf0.

It is noted that when inverse Fourier transform is performed on the multiplexed signals at a later stage by the IFFT unit 36, the non-adjacent sub carriers SCf0, SCf6, and SCf12 are assigned to the sub pattern elements P00-P02 of the first half (MUX output 1), and the non-adjacent sub carriers SCf0, SCf6, and SCf12 of the second half are assigned to the next sub pattern elements P03-P05 of the second half (MUX output 2) in a similar manner. As can be appreciated, in the present embodiment, the preamble pattern P0 is divided into two in the time axis (i.e., the number of symbols in the time axis is two) upon being transmitted. It is noted that similar procedures are performed with respect to the other preamble patterns P1-P5.

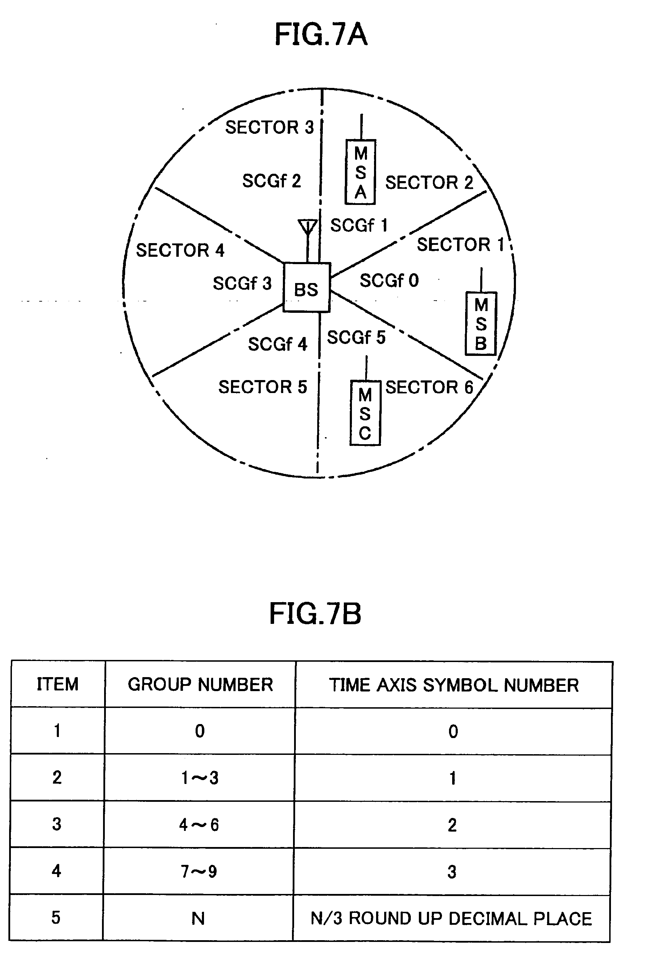

FIG. 7A is a diagram showing an exemplary division of a cell into sectors according to the second embodiment. In this example, the entire band of a cell is divided into six sub carrier groups SCGf0-SCGf5, and sectors 1-5 are respectively assigned to the sub carrier groups SCGf0-SCGf5. In this case, a base station BS may accommodate six sectors while maintaining the advantageous effects of the OFDM/OFDMA scheme under a multi-path environment.

It is noted that the cell division illustrated in FIG. 7A is merely an illustrative example; that is, the position and size of the sectors of a cell may be defined arbitrarily within the cell area administered by the base station BS (e.g., within a radius of a few kilometers from the base station BS).

FIG. 7B is a table showing the relationship between the number of sub carrier groups and the number of symbols in the time axis. As is shown in this drawing, when a cell is divided into one to three sub carrier groups (e.g., see FIGS. 2A, 2B, 5A and 5B), one symbol in the time axis may be provided. When a cell is divided into four to six sub carrier groups (see FIGS. 6A, 6B, 8A, and 8B), two symbols in the time axis may be provided. As can be appreciated, generally, when the number of sub carrier group is an arbitrary integer number N, the number of symbols in the time axis may be N/3 (the decimal place being rounded up).

FIG. 8A is a diagram showing a frame format of a physical layer according to a third embodiment of the present invention. In the present embodiment, plural types of preamble patterns are assigned to at least four sub carrier groups (e.g., six sub carrier groups SCGf0-SCGf5 in the illustrated example) each including sub carriers that are adjacent to each other. Also, the preamble patterns are divided into groups of sub pattern elements, and the groups of sub pattern elements are time-multiplexed on the physical layer format.

In the present example, the preamble generating unit 31 generates six types of preamble patterns P0-P5 according to a preamble generating command from the carrier assigning unit 21 of the MAC processing unit 20. The multiplexing unit 34 divides each of the preamble patterns into two groups of sub pattern elements (e.g. , the preamble pattern P0 is divided into a group of the sub pattern elements P00-P02 and a group of the sub pattern elements P03-P05) and multiplexes the groups of sub pattern elements into two multiplexed signals in the time axis direction according to a multiplexing format designated by the symbol assigning unit 22 of the MAC processing unit 20.

FIG. 8B is a diagram illustrating a format of the preamble multiplexed signals. In the present example, the six preamble patterns P0-P5 are arranged to be associated with the sub carrier groups SCGf0-SCGf5 that each include sub carriers that are adjacent to each other. For example, the preamble pattern P0 is divided into a group including the first half of the adjacent sub pattern elements P00-P02 and a group including the second half of the adjacent sub pattern elements P03-P05. The group of the first half of the sub patterns P00-P02 is multiplexed to corresponding positions of the sub carriers SCf0, SCf1, and SCf2 of the sub carrier group SCGf0, and then, the group of the second half of the sub pattern elements P03-P05 is similarly multiplexed to corresponding positions of the sub carriers SCf0, SCf1, and SCf2 of the sub carrier group SCGf0.

It is noted that when inverse Fourier transform is performed on the multiplexed signals at a later stage by the IFFT unit 36, the adjacent sub carriers SCf0, SCf1, and SCf2 are assigned to the sub pattern elements P00-P02 of the first half (MUX output 1), and then, the adjacent sub carriers SCf0, SCf1, and SCf2 are assigned to the next sub pattern elements P03-P05 of the second half (MUX output 2) in a similar manner. As can be appreciated, in the present embodiment, the preamble pattern P0 is divided into two in the time axis (i.e., the number of symbols in the time axis is two) upon being transmitted. It is noted that similar procedures are performed with respect to the other preamble patterns P1-P5.

In the present embodiment, the entire band within a cell is divided into six sub carrier groups SCGf0-SCGf5 that are respectively assigned to sectors 1-6 so that the preamble patterns P0-P5 are transmitted to the sectors 1-6 through frequency division multiplexing (FDD) .

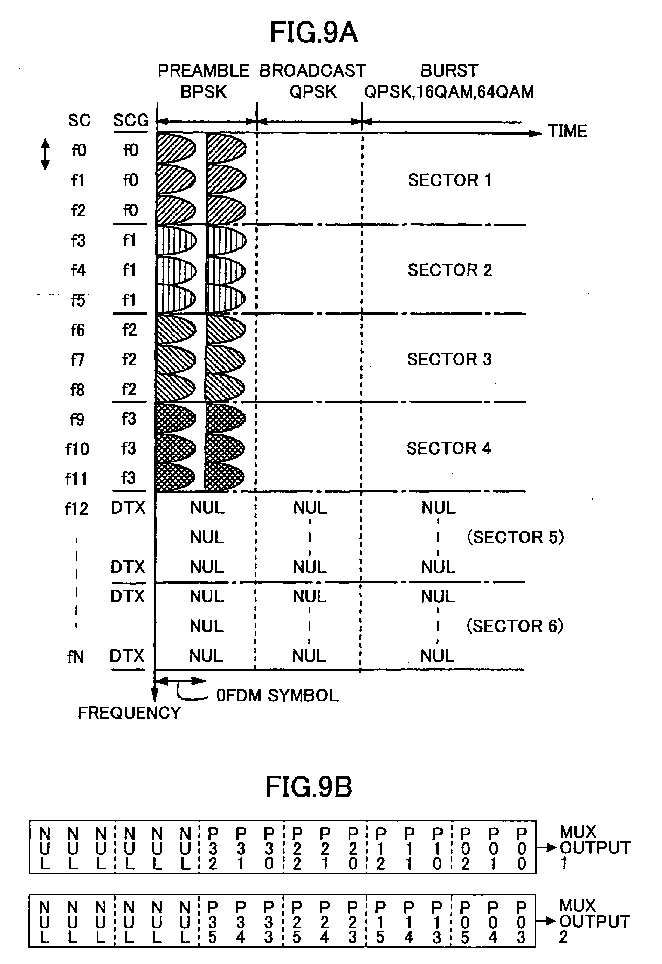

FIG. 9A is a diagram showing a frame format of a physical layer according to a fourth embodiment of the present invention. In the present embodiment, a DTX command is activated at the preamble generating unit 31, the broadcast generating unit 32, and the burst generating unit 33 for stopping transmission of a the sub carriers of at least one sub carrier group (sector) so that communication using this sub carrier group (sector) may be in an unused state (i.e., free space may be created in the OFDMA communication).

For example, assuming that communication is established according to the frame format as is illustrated in FIG. 8A according to instructions from the MAC processing unit 20, in a case where transmission of sectors 5 and 6 is desirably stopped, the carrier stopping unit 23 of the MAC processing unit 20 transmits transmission stopping DTX commands to the preamble generating unit 31, the broadcast generating unit 32, and the burst generating unit 33. In turn, the preamble generating unit 31, the broadcast generating unit 32, and the burst generating unit 33 generate null data (NUL). The multiplexing unit 34 develops null data in the areas corresponding to the sectors 5 and 6 based on the physical layer format of the sectors 5 and 6. By arranging the null data in the corresponding areas as is described above, the sub carriers of the corresponding areas may be prevented from being transmitted.

FIG. 9B is a diagram showing an exemplary format of preamble multiplexed signals that may be generated in the above-described case. In the illustrated example, a multiplexing scheme identical to that described in relation to the example of FIG. 8B is used; however, null data are multiplexed to the preamble areas corresponding to the sectors 5 and 6.

In a later stage where the multiplexed signals are processed by the S/P converter 35, the IFFT unit 36, and the P/S converter 37, inverse fast Fourier transform is performed on the multiplexed signals in a manner such that sub carrier components corresponding to the portions where the null data are multiplexed are not multiplexed to the output signal, and in this way, transmission power of the sub carriers corresponding to the null data portions may be stopped. It is noted that similar processes are performed with respect to broadcast areas and data burst areas. In this way, corresponding carrier components are not transmitted to the wireless space of the sectors 5 and 6 so that free space may be created in the OFDMA communication.

FIG. 10A is a diagram showing a frame format of a physical layer according to a fifth embodiment of the present invention. In the present embodiment, null data are multiplexed to preamble pattern areas corresponding to at least one sub carrier group (sector) on the physical layer format so that transmission of the corresponding preamble pattern may be stopped. Also, in the present embodiment, the broadcast generating unit 32 and the burst generating unit 33 are activated to arrange the data burst transmission area (communication band) of the sub carrier group (sector) of which preamble transmission has been stopped to be usable as the data burst transmission area of another sub carrier group (sector) with a large amount of transmission data, for example.

For example, assuming that communication is established according to the frame format as is illustrated in FIG. 8A according to instructions from the MAC processing unit 20, in a case where there is a large amount of transmission data for sectors 1 and 3 and there is no transmission data for sectors 2 and 5, the preamble stopping unit 24 of the MAC processing unit 20 transmits a transmission stopping DTX command to the preamble generating unit 31. In turn, the preamble generating unit 31 generates null data (NUL), and the multiplexing unit 34 develops the null data in the preamble areas of the sectors 2 and 5 based on the physical layer format of the sectors 2 and 5. FIG. 10B is a diagram illustrating preamble multiplexed signals that may be generated in the present example. By arranging the null data in the corresponding areas as is described above, the sub carriers of the corresponding areas may be prevented from being transmitted. That is, in this example, transmission of the preamble patterns corresponding to sectors 2 and 5 is stopped.

Further, the wireless band assigning unit 25 of the MAC processing unit 20 may direct the broadcast generating unit 32, the burst generating unit 33, and the multiplexing unit 34 to assign (add) the unused communication band of the sectors 2 and 5 to the sectors 1 and 3 with large transmission data according to instructions from the wireless link managing apparatus 50, for example. The multiplexing unit 34 performs multiplexing processes on the broadcast data and data bursts according to a designated physical layer format so that data in the format as is shown in FIG. 10A may be transmitted. In the present example, although the preamble patterns of sectors 2 and 5 are not transmitted, the preamble patterns of sectors 1 and 3 are transmitted and the communication bands of sectors 2 and 5 are used by sectors 1 and 3 through preamble synchronization.

In this way, for example, user A in sector 1 may user the communication band of sector 1 and a new user B in sector 1 may use the unused communication band of sector 2. It is noted that the unused communication band of sector 5 is provided for use as additional communication band of sector 3. It is noted that although sectors 3 and 5 are set apart by sector 4, the communication bands of sectors 3 and 5 may be appropriately used under broadcast instructions by the DL_MAP, for example.

Although the present invention is shown and described with respect to certain preferred embodiments with specific numbers, it is obvious that equivalents and modifications will occur to others skilled in the art upon reading and understanding the specification. The present invention includes all such equivalents and modifications, and is limited only by the scope of the claims.

The present application is based on and claims the benefit of the earlier filing date of Japanese Patent Application No. 2006-121941 filed on April 26, 2006, the entire contents of which are hereby incorporated by reference.

## Claims

1. An OFDMA communication apparatus that operates under media access control based on an OFDMA standard and modulates transmission data into an OFDMA signal, the apparatus comprising:
a preamble generating unit that generates a plurality of types of preamble patterns;
a broadcast generating unit that generates broadcast data;
a burst generating unit that generates a data burst according to the transmission data;
a data multiplexing unit that generates multiplexed data by multiplexing the preamble patterns generated by the preamble generating unit, the broadcast data generated by the broadcast generating unit, and the data burst generated by the burst generating unit on a predetermined physical layer format;
an OFDM unit that performs orthogonal frequency division multiplexing on the multiplexed data using a plurality of sub carriers; and
a carrier assigning unit that assigns the preamble patterns to a plurality of sub carrier groups, each of which sub carrier groups includes a plurality of the sub carriers that are adjacent to each other.

2. An OFDMA communication apparatus that operates under media access control based on an OFDMA standard and modulates transmission data into an OFDMA signal, the apparatus comprising:
a preamble generating unit that generates a plurality of types of preamble patterns;
a broadcast generating unit that generates broadcast data;
a burst generating unit that generates a data burst according to the transmission data;
a data multiplexing unit that generates multiplexed data by multiplexing the preamble patterns generated by the preamble generating unit, the broadcast data generated by the broadcast generating unit, and the data burst generated by the burst generating unit on a predetermined physical layer format;
an OFDM unit that performs orthogonal frequency division multiplexing on the multiplexed data using a plurality of sub carriers;
a carrier assigning unit that assigns the preamble patterns to at least four sub carrier groups; and
a symbol assigning unit that divides the preamble patterns into a plurality of sub pattern element groups which sub pattern elements groups are time-multiplexed on the predetermined physical layer format.

3. The OFDMA communication apparatus as claimed in claim 2, wherein
the carrier assigning unit assigns the preamble patterns to at least four sub carrier groups, each of which sub carrier groups includes a plurality of the sub carriers that are not adjacent to each other.

4. The OFDMA communication apparatus as claimed in claim 2, wherein
the carrier assigning unit assigns the preamble patterns to at least four sub carrier groups, each of which sub carrier groups includes a plurality of the sub carrier that are adjacent to each other.

5. The OFDMA communication apparatus as claimed in claim 2, further comprising:
a carrier stopping unit that controls a DTX command for at least one of the sub carrier groups to be activated at the preamble generating unit, the broadcast generating unit, and the burst generating unit, and stops transmission of the sub carriers belonging to said at least one of the sub carrier groups.

6. The OFDMA communication apparatus as claimed in claim 2, further comprising:
a preamble stopping unit that directs null data to be multiplexed on a preamble pattern area on the predetermined physical layer format corresponding to at least one of the sub carrier groups, and stops transmission of at least one of the preamble patterns corresponding to said preamble pattern area.

7. The OFDMA communication apparatus as claimed in claim 6, further comprising:
a band control unit that controls the broadcast generating unit and the burst generating unit to arrange a data burst transmission area of said at least one of the sub carrier groups to be used as a data burst transmission area of at least another one of the sub carrier groups.

8. The OFDMA communication apparatus as claimed in claim 2, wherein
the sub carrier groups are assigned to a plurality of sectors into which an administered cell is divided.
